# EUROPÄISCHE PATENTSCHRIFT

(11) **EP 1 893 882 B1**
(45) Veröffentlichungstag und Bekanntmachung des Hinweises auf die Patenterteilung: **17.04.2013**
(21) Anmeldenummer: 06754354.6
(22) Anmeldetag: 14.06.2006
(51) Int. Cl.: F16D 65/18

(54) **SCHEIBENBREMSE MIT ELEKTROMOTORISCH BETRIEBENEN NACHSTELLVORRICHTUNGEN UND VERFAHREN ZUR DURCHFÜHRUNG EINER PARKBREMSUNG**
DISK BRAKE COMPRISING ELECTRIC MOTOR-DRIVEN ADJUSTING DEVICES AND METHOD FOR BRAKING USING THE PARKING BRAKE
FREIN A DISQUE DOTE DE DISPOSITIFS DE RATTRAPAGE DE JEU ACTIONNES PAR UN MOTEUR ELECTRIQUE ET PROCEDE DE PRODUCTION D'UN FREIN DE STATIONNEMENT

(30) Priorität: 16.06.2005 DE 102005027915
(43) Veröffentlichungstag der Anmeldung: 05.03.2008
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GERUM, Eduard, 82026 Rosenheim (DE); HERGES, Michael, 80935 München (DE); GANZHORN, Dirk, 81543 München (DE); LANGE, Stephan, 13465 Berlin (DE); KIENER, Wolfgang, 10247 Berlin (DE); CSAK, Bence, H-1124 Budapest (HU); SAVAGNER, Nicolas, F-14100 Le Mesnil Eudes (FR); NEUMANN, Uwe, 96050 Bamberg (DE); GRADL, Matthias, 96145 Sesslach (DE); SCHÄFER, Matthias, 96450 Coburg (DE)
(74) Vertreter: Mattusch, Gundula
(86) Internationale Anmeldenummer: PCT/EP2006/005708
(87) Internationale Veröffentlichungsnummer: WO 2006/133917

(56) Entgegenhaltungen:
- EP-A- 0 526 273
- EP-A- 0 995 659
- EP-A- 1 138 971
- EP-A- 1 596 089
- WO-A-03/052286
- DE-A1- 10 234 848
- DE-A1- 10 320 907

## Beschreibung

Die Erfindung betrifft eine Scheibenbremse mit elektromotorisch betriebenen Nachstellvorrichtungen nach dem Oberbegriff des Anspruchs 1 und ein Verfahren zur Durchführung einer Parkbremsung mit einer derartigen Scheibenbremse.

Gattungsgemäße Scheibenbremsen sind an sich bekannt, so aus der PCT/EP01/09370 Die Zuspannung der Bremse erfolgt durch eine Zuspanneinrichtung, die von einem pneumatisch betätigten Aktuator betätigt wird. Dieser Aktuator kann ein Federspeicherbremszylinder oder ein Betriebsbremszylinder sein.

Die Parkbremswirkung wird in schweren Nutzfahrzeugen mit Druckluftbremsanlage üblicherweise durch die Federspeicherbremszylinder realisiert. Der Federspeicherzylinder wirkt im Parkbremsfall mit der Kraft seiner Speicherfeder auf das Betätigungsorgan der Radbremse und erzeugt auf diese Weise die notwendige Haltekraft.

Im aktivierten Zustand wird die Speicherfeder durch einen druckbeaufschlagten Kolben so weit vorgespannt, daß keine Kraft von dieser Feder auf das Betätigungsorgan der Bremse abgegeben wird und das Fahrzeugrad zum freien Lauf freigegeben ist.

An dieser Idee ist vorteilhaft, daß die vorhandene Betriebsbremse auch als Parkbremse genutzt wird. Sie ist zudem sehr robust und kann besonders zuverlässig ausgeführt werden.

Nachteilig sind jedoch der sehr große Bauraumbedarf und das hohe Gewicht des Federspeicherzylinders, der hohe Druckluftverbrauch desselben und die Notwendigkeit einen eigenen Druckversorgungskreis für die Parkbremse aufzubauen.

Neben dieser in schweren Nutzfahrzeugen üblichen Ausführung der Parkbremse sind auch andere Halteeinrichtungen für Radfahrzeuge verschiedenster Ausführung realisiert oder in der Literatur beschrieben.

Vorteilhaft erscheinen insbesondere Systeme, die zum Betätigen der Parkbremse den Betriebsbremsaktuator benutzen und dann durch einen Verriegelungsmechanismus die Bremse am Bremshebel oder der Kolbenstange des Bremszylinders im eingebremsten Zustand halten.

Der Betriebsbremsaktuator wird also nur zum Betätigen der Bremse genutzt, die Haltewirkung erfolgt nach dem Lösen des Betriebsbremsaktuators ausschließlich mechanisch.

Einen derartigen Stand der Technik zeigen die DE 1 218 891 B. Die EP 0 995 659 A1 offenbart eine Scheibenbremse gemäß dem Oberbegriff des Anspruchs 1.

Bei den in diesen Schriften beschriebenen Lösungen wird entweder der Bremszylinderstößel oder der Bremshebel verriegelt. Der Bremshebel ist dabei im Kraftfluss der wirkenden Verspannkräfte. Die Verriegelungseinrichtung erfordert einen zusätzlichen unabhängigen Antrieb (elektrisch oder pneumatisch), wodurch aber ein zusätzlicher Bauraum und spezielle Steuerungsmittel benötigt werden.

In der EP 0 526 273 A ist eine verriegelbare Scheibenbremse offenbart, die hydraulisch betätigbar ist, jedoch keine Nachstelleinrichtung zum Ausgleich eines verschleißbedingten Lüftspiels aufweist.

Vor diesem Hintergrund ist es die Aufgabe der Erfindung, die gattungsgemäße Scheibenbremse derart weiterzuentwickeln, dass mit konstruktiv einfachen Mitteln eine Parkbremsfunktion realisierbar wird.

Die Erfindung löst diese Aufgabe durch den Gegenstand des Ansprüchs 1.

Vorteilhafte Ausgestaltungen sind den Unteransprüchen zu entnehmen.

Die Erfindung realisiert eine Scheibenbremse, bei der eine Parkbremsfunktion unter Nutzung eines besonders raumsparenden Verriegelungsmechanismus realisiert wird, so dass die erfindungsgemäße Scheibenbremse nur einen minimalen Aufwand an Bauraum, Steuerungsmitteln und Kosten erfordert.

Die Erfindung ordnet den Stellkolben bzw. Nachstelldrehspindeln wenigstens eine oder mehrere Verriegelungseinrichtungen zu. Hieran ist vorteilhaft, dass die Nachstelleinrichtungen, die einerseits als Stellkolben beim Zuspannen der Bremse und andererseits eben zum Ausgleich des Belag- und vorzugsweise Scheibenverschleißes dienen, eine überraschend einfache und raumsparende Anordnung bzw. Unterbringung der Verriegelungsvorrichtung(en) ermöglichen.

Das Verriegeln erfolgt mittels Verspreizmuttern. Diese Variante eignet sich besonders für pneumatisch betätigten Scheibenbremse mit elektromotorisch betätigten Nachstellvorrichtungen gelöst, da diese bereits eine Stromversorgung für den Antrieb der Verspreizmuttern aufweisen.

Zur Betätigung des Verriegelungssystems ist ein unabhängiger Antrieb denkbar oder es wird der Antrieb des Nachstellsystems genutzt.

Besonders vorteilhaft und kostengünstig sind jedoch die Nutzung des vorhandenen Antriebes der Stellkolben sowie die ebenfalls für den Betrieb des Verschleißnachstellsystems vorhandenen Steuerungsmitteln.

Das Verriegeln der Stellkolben kann in einer Ausführungsvariante nich gemäß der Erfindung anstelle der Verdrehung von Verspreizmuttern auch durch Einschieben oder Einschwenken von Verriegelungselementen erfolgen, durch welche die Blockade der Nachstellmuttern gegen Anschlagflächen am Bremssattel bewirkt wird.

Ebenso sind anders gearteter Verriegelungselemente zum Fixieren der axialen Position der Stellkolben prinzipiell denkbar.

Besonders vorteilhaft ist jedoch eine Ausführungsart der Erfindung mit Verspreizmuttem, bei der sowohl zur Realisierung der Verspreizmuttern selbst als auch zu deren Betätigung auf die vorhandenen Bauteile der Stellkolben und der Nachstellvorrichtung sowie auch deren Antrieb und Steuerung zurückgegriffen wird.

Die auf den Nachstellspindeln oder -hülsen angeordneten und zum Antrieb derselben dienenden Zahnräder werden dabei vorzugsweise zusätzlich als Verspreizmuttern genutzt.

Die Verbindung der Zahnräder mit den Stellkolben ist besonders bevorzugt so gestaltet, dass die Zahnräder über ein Gewinde auf die Stellkolben aufgeschraubt sind und in ihrer Normalposition an einem Anschlag an den Stellkolben anliegen.

Die Drehmomentübertragung erfolgt in einer Drehrichtung gegen diesen Anschlag, an den Stellkolben. In der entgegengesetzten Drehrichtung würden sich die Zahnräder jedoch von diesem Anschlag lösen.

Aus diesem Grunde sind die Zahnräder vorzugsweise zusätzlich mit den Stellkolben über eine vorgespannte Rutschkupplung verbunden, die ein Lösen erst oberhalb eines bestimmten Grenzdrehmoments zulässt, wobei das Grenzdrehmoment oberhalb des Arbeitsbereiches des Nachstellantriebs liegt.

Infolge der Verdrehblockade der Stellkolben beim Bremsen steigt das wirksame Antriebsmoment jedoch stark an, so dass nunmehr die als Verspreizmuttern dienenden Zahnräder sich in der Rutschkupplung gegen die Stellkolben verdrehen und dabei in ihrem Gewinde axial verstellt werden, bis sie in den Anschlagflächen des Bremssattels zur Anlage gekommen sind.

Nachfolgend seinen nochmals wesentliche Vorteile der Erfindung und einiger ihrer wesentlichsten Weiterbildungen dargestellt.

Zunächst bietet die Erfindung die Möglichkeit zur Realisierung der Parkbremsfunktion durch Betätigen der Bremse mittels Betriebsbremszylinder und Verriegeln der Nachstellspindeln - Stellkolben - in der eingebremsten Position mittels Verriegelungsvorrichtungen, vorzugsweise durch die auf diesen Nachstellspindeln angeordneten Verspreizmuttem.

Vorteilhaft und kostensparend ist auch die Nutzung der vorhandenen Nachstellspindel-Antriebszahnräder als Verspannmuttern.

Ebenfalls als vorteilhaft zu erwähnen ist die Nutzung des vorhandenen Nachsteller-Antriebs-Steuerungs- und Kommunikations-Systems zur Steuerung und zum Betrieb der Parkbremsverriegelung.

Ein weiterer Vorteil ist in der Nutzung der der an den Nachstellspindeln im eingebremsten Zustand auftretenden Verdrehhemmung um eine Antriebsdrehmoment-Schwelle für die Spindelzahnräder zu erzeugen, wobei unterhalb der Drehmomentschwelle das Spindelzahnrad über eine drehmomentabhängige Kupplung die Spindeln zur Ausführung des Nachstellvorganges antreibt und bei im eingebremsten Zustand blockierten Nachstellspindeln, das Spindelzahnrad gegen den Widerstand der drehmomentabhängigen Kupplung in einer Gewindeverbindung zur Nachstellspindel verdreht wird, um das Spindelzahnrad relativ zur Nachstellspindel axial zu verstellen und an die Anschlagfläche am Bremssattel anzulegen.

Vorzugsweise wird die drehmomentgesteuerte Kupplung als vorgespannte Reibungskupplung ausgeführt.

Eine radiale Vorspannung der Kupplung kann über radial zwischen Spindelzahnrad und Nachstellspindel wirkenden Feder-Reibelementen, z.B. in Form eines Toleranzringes bzw. eines Federringes erfolgen.

Eine axiale Vorspannung der Kupplung ist durch eine Kombination des Spindelzahnrades mit einem zweiten Gewindestellring denkbar, wobei der zweite Gewindestellring gegen das Zahnrad axial elastisch vorgespannt wird, so dass im Gewinde das notwendige Reibmoment erzeugt wird.

Ebenfalls vorteilhaft ist die Möglichkeit zur Einstellung der axialen Vorspannung des Reibmomentes, so dass der Gewindestellring gegen die Kraft einer Feder, z.B. einer Druckfeder, durch Verdrehen relativ zum Spindelzahnrad axial verstellt wird, bis das vorgegebene Durchrutschmoment erreicht ist.

Nach dem Einstellvorgang erfolgt eine Verdrehsicherung des Gewindestellringes relativ zum Spindelzahnrad. Diese Verdrehsicherung kann z.B. dadurch erfolgen, dass der Gewindestellring am Außenumfang eine dem Spindelzahnrad entsprechende Verzahnung erhält und das antreibende Zahnrad mit beiden Verzahnungen gleichzeitig im Eingriff steht.

Weiter vorteilhaft ist eine Anordnung des Spindelzahnrades bzw. der Kombination von Spindelzahnrad und Gewindestellring auf der Nachstellspindel so, dass das Spindelzahnrad im Normalzustand (Nachstellbetrieb) an einem definierten Anschlag an der Nachstellspindel anliegt und nur bei Parkbremsvorgängen von diesem Anschlag wegbewegt wird.

Steuerung der Parkbremsfunktion:

Zur Ausführung eines Verriegelungsvorganges erfolgt eine Ansteuerung der integrierten elektronischen Steuerung der Bremse z.B. über einen vorhandenen Datenbus, z.B. vom EBS, oder dem Parkbrems-Sollwertgeber oder dem Fahrzeugzentralrechner oder einem anderen Fahrzeugsystem. Sodann erfolgten autarker Ablauf des Verriegelungsvorganges. Die Steuerung des gesamten Parkbremsvorganges einschließlich des Be- und Entlüftens der Betriebsbremszylinder kann mit Hilfe EBS, oder ABS + ASR-Ventil oder ABS + inverses Relaisventil erfolgen.

Nachfolgend wird die Erfindung unter Bezug auf die Zeichnung anhand eines Ausführungsbeispiels näher beschrieben. Es zeigt:
Fig. 1a-c einen Teil einer schematisch dargestellten Scheibenbremse in drei verschiedenen Betriebszuständen;
Fig. 2 und 3 Schnittansichten einer Scheibenbremse des Standes der Technik, deren Zuspanneinheit nach Art der Fig. 1 ausgestaltet werden könnte.

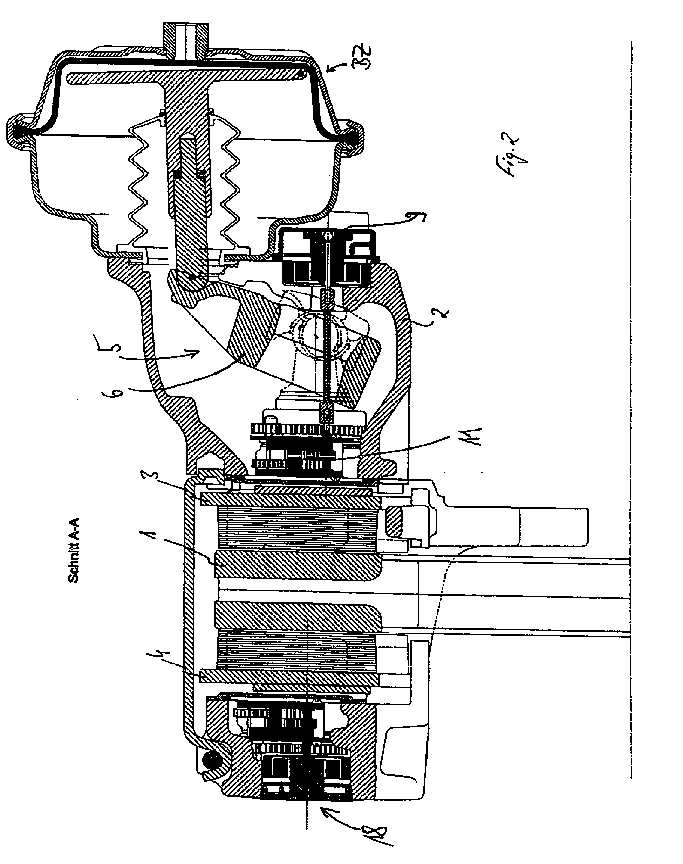

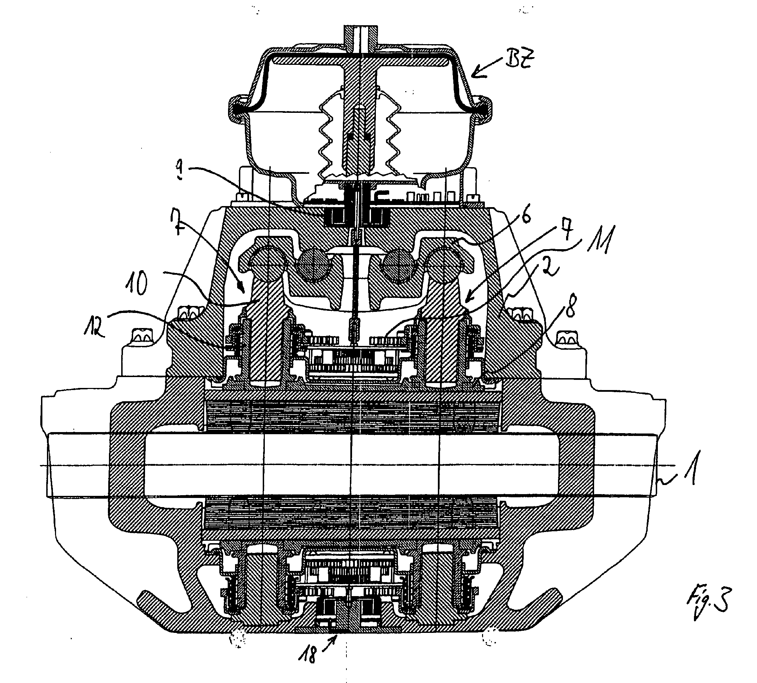

Fig. 2 und 3 zeigen eine Scheibenbremse nach dem Stand der Technik, die einen eine Bremsscheibe 1 zumindest im äußeren Umfangsbereich ein- bzw. umfassenden Bremssattel 2 aufweist.

Beidseits der Bremsscheibe 1 sind Bremsbeläge 3, 4 angeordnet, wobei der eine der beiden Bremsbeläge mittels einer Zuspannvorrichtung 5 in Richtung der Bremsscheibe 1 verschiebbar ist, die z.B. als Schiebescheibe ausgebildet ist.

Bei Bremsungen wird zunächst der zuspannseitige Bremsbelag 3 gegen die Bremsscheibe 1 und dann die Bremsscheibe 1 weiter gegen den zweiten Bremsbelag auf der Reaktionsseite bewegt.

Die Zuspannvorrichtung wird in der Regel von einem pneumatisch betätigten Aktuator wie einem Betriebsbremszylinder BZ betätigt. Denkbar ist auch eine Betätigung über einen elektromotorischen Aktuator.

Sie weist z.B. einen Drehhebel 6 auf, der exzentrisch im Bremssattel 2 gelagert ist und zum axialen Verschieben von Stellkolben 7 (Fig. 3) ausgelegt ist, die im Bremssattel 2 axial beweglich angeordnet sind und an ihren Enden Druckstücke oder eine Druckplatte 8 aufweisen, die auf den zuspannseitigen Bremsbelag 3 einwirken/einwirkt.

Zum Ausgleich von Bremsbelagverschleiß und Scheibenverschleiß wird die axiale Länge der Stellkolben 7 verändert, die an ihren einen Enden mittels der Druckstücke 8 auf den Bremsbelag 3 einwirken und die an ihren gegenüberliegenden Enden an einem Zuspannelement der Zuspanneinrichtung, hier dem Drehhebel 6 abgestützt sind.

Die zuspannseitigen Stellkolben 7 sind einerseits als Gesamtheit axial verschieblich, um die Bremse zuzuspannen und sie zu lösen und andererseits ist ihre Länge veränderlich, um den Belag- und Scheibenverschleiß auszugleichen.

Die zuspannseitigen Stellkolben 7 bestehen je zumindest aus einer Spindel 10 mit einem Außengewinde und einer auf die Spindel 10 aufgeschraubten Hülse 12 mit einem korrespondierenden Innengewinde.

Zur Veränderung der axialen Länge der Stellkolben 7 dient wenigstens ein elektromotorischer Antrieb 9, der über Getriebeelemente wie Zahnräder 11 auf die Stellkolben einwirkt, um die Hülsen 12 relativ zu den Spindeln 10 zu verschrauben bzw. zu verdrehen, so dass sich die axiale Länge der Stellkolben 7 aus Hülse 12 und Spindel 10 verändert.

Auf der Reaktionsseite ist eine eigene Nachstellvorrichtung mit Nachstellspindeln und Antrieb, die in ihrer Gesamtheit das Bezugszeichen 18 trägt, angeordnet.

Hier ist die Spindel 10 zum Drehhebel 6 hin orientiert und die Hülse 12 zur Druckplatte 8. Diese Anordnung kann auch umgekehrt werden.

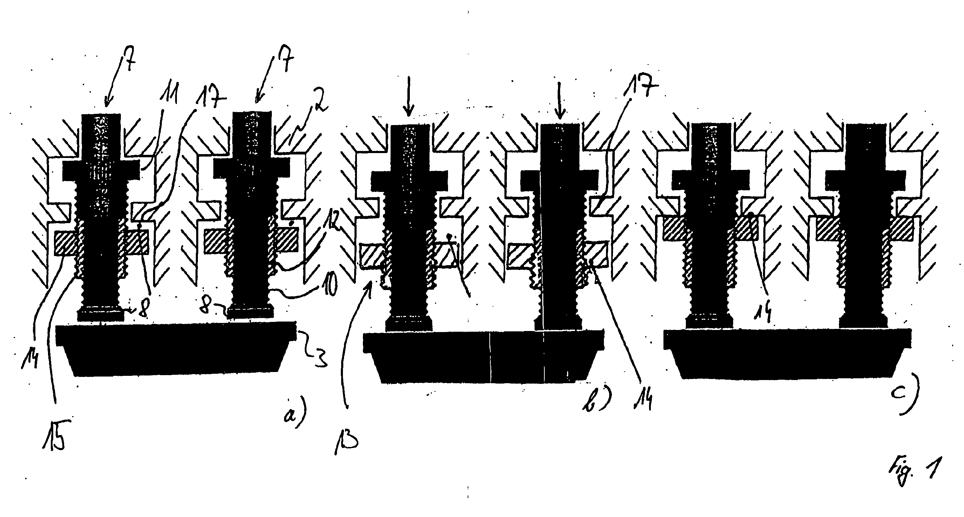

Soweit ist die Scheibenbremse der Fig. 1 an sich bekannt.

Die Erfindung ordnet den zuspannseitigen Stellkolben nunmehr nach Art der Prinzipdarstellung der Fig. 1 wenigstens eine oder mehrere Verriegelungseinrichtungen 13 zu, dies es erlauben, auf einfache Weise die Position der Stellkolben bei Bremsungen z.B. zur Durchführung von Parkbremsungen zu fixieren bzw. "einzufrieren", so dass die Bremse im eingebremsten Zustand verbleibt.

Hieran ist zunächst vorteilhaft, dass die Stellkolben 7, die einerseits beim Zuspannen der Bremse und andererseits zum Ausgleich des Belag- und vorzugsweise Scheibenverschleißes dienen, eine überraschend einfache und raumsparende Anordnung bzw. Unterbringung und Ansteuerung der Verriegelungsvorrichtung(en) 13 ermöglichen.

Erfindungsgemäß ist also in vorteilhafter Weise möglich, die axiale Position der Stellkolben als Ganzes, so beispielsweise bei Bremsungen, zu verriegeln. Hierzu ist eine Verriegelungseinrichtung zur Fixierung der axialen Position der Stellkolben vorgesehen.

Fig. 1 zeigt einen Teilbereich einer schematisch im Schnitt dargestellten Scheibenbremse in drei verschiedenen Betriebszuständen.

Die Scheibenbremse der Fig. 1 weist wiederum den Bremssattel 2 auf, der die Bremsscheibe 1 im oberen Umfangsbereich einfasst (hier nur abschnittsweise dargestellt).

Bei Bremsungen wird der zuspannseitige Bremsbelag 3 in Richtung der Bremsscheibe verschoben und dann entweder die Bremsscheibe 1 in Richtung des weiteren Bremsbelages 3 bewegt oder des wird der reaktionsseitige, gegenüberliegende Bremsbelag 4 mittels einer Schiebe- oder Schwenksattelanordnung in Richtung des zuspannseitigen Bremsbelags 3 bewegt.

Auf den Bremsbelag 3 wirken die Druckstücke 8 ein, die senkrecht zur Bremsscheibenebene bzw. parallel zur Bremsscheibenachse verschieblich geführt sind.

Bei einer Betriebsbremsung werden einfach die gesamten Stellkolben 7 in Richtung der Bremsscheibe verschoben (Fig. 1a zu Fig. 1b), bis die Bremsbeläge an der Bremsscheibe anliegen und die Bremswirkung eintritt.

Dies wird mittels des Bremsaktuators realisiert (z.B. der pneumatisch betätigte Bremszylinder, dessen Kolbenstange auf einen Drehhebel einwirkt, der derart im Bremssattel angeordnet ist, dass er bei Bremsungen die beiden Druckstücke axial in Richtung der Bremsscheibe verschiebt).

Das Verdrehen der Stellkolben zur axialen Längenveränderung erfolgt mittels eines vom Bremsaktuator unabhängigen Elektromotors 9, der z.B. direkt oder über eine Getriebeverbindung auf Verzahnungen 11 z.B. am Außenumfang der Hülsen 12 einwirkt.

Hier weist die Mutter bzw. Hülse der Nachstelldreheinrichtung nicht nur ein Innengewinde auf, mit dem sie auf dem Gewindebolzen aufgeschraubt ist, der an seinem einen axialen Ende das Druckstück trägt sondern es ist als Verriegelungsvorrichtung eine ergänzende Verspreizmutter 14 auf ein Außengewinde 15 der Hülse 12 aufgeschraubt, deren Position 12 auf der Hülse z.B. mittels eines weiteren Elektromotors oder mit Hilfe des Elektromotors 8 (Fig. 2) für die Nachstellung verdrehbar ist, derart, dass die Verspreizmutter 14 gegen einen axialen Anschlag, z.B. einen Bund 17 des Bremssattels bewegbar ist, wodurch es möglich ist, die Lage des Stellkolben bei Betriebs- und/oder Parkbremsungen zu verändern.

Mit dieser Anordnung lassen sich insbesondere in einfacher Weise Parkbremsungen realisieren.

Dies sei nachfolgend näher erläutert.

### Fig. 1: Phase 1 - Nicht betätigter Zustand der Bremse:

Der Drehhebel (Betriebshebel) und die Stellkolben bzw. Nachstelldreheinrichtungen befinden sich in ihrer Ruheposition.

Die auf den Nachstellhülsen 12 angeordneten Verspreizmuttern 14 stehen mit geringem Abstand unter den Anschlagflächen des Bremssattels.

### Phase 2 - Bremsbetätigung durch BBA-Zylinder:

Bei der Betätigung der Bremse zur Durchführung einer Betriebsbremsung werden die Stellkolben 7, über welche die gesamte Spannkraft übertragen wird, zur Überwindung des Lüftspiels und der Elastizitäten in Richtung Bremsscheibe verschoben. Die Spannkraft der Bremse wirkt nun von dem auf die Bremsscheibe 2 angepressten Bremsbelag 3 über die Nachstellkolben 7 sowie den Bremshebel 5 und dessen Lagerelemente auf den Bremssattel 2. Innerhalb des Bremssattels 2 erfolgt der Reaktionskraftausgleich mit dem gegenüberliegenden Bremsbelag 4.

Die Verspreizmuttern 14 haben infolge der Verschiebung der Stellkolben 7 einen um den Verschiebeweg größeren Abstand von den Anschlagflächen des Bremssattels eingenommen (Fig. 1b).

### Phase 3 - Verriegelung der Bremse (Parkbremsfunktion):

Die Verspreizmuttern 14 werden jetzt im betätigten Zustand der Bremse so weit zurückgedreht, dass sie an den Anschlagflächen 15 des Bremssattels zur Anlage kommen.

Nach dem Entlüften des BBA-Zylinders geht der Bremshebel in seine Ruhelage zurück und wird dabei kraftfrei. Die Spannkraft der Bremse wird jetzt von den Nachstellspindeln über die Verspreizmuttern 14 sowie über die Anschlagflächen des Anschlages 17 direkt in den Bremssattel 2 eingeleitet.

Die Spannkraft sowie die Haltewirkung der Bremse bleiben auf diese Weise auch nach Entlüften des BBA-Zylinders erhalten.

Derart wird auf einfache Weise eine Parkbremsfunktion realisiert (Fig. 1c).

### Phase 4 - Lösen der Parkbremse:

Zum Lösen der Parkbremse werden die Verspreizmuttern 14 durch eine Betätigung des BBA-Zylinders BZ von den Anschlagflächen des Bremssattels 2 gelöst. Dann erfolgt eine Rückstellung der Verspreizmuttern 14 in ihre Normalposition und schließlich wieder das Entlüften des Zylinders BZ, womit die Bremse wieder ihren kraftfreien Ausgangszustand erlangt.

Ein möglicher Gesamtablauf unter Einbeziehung des EBS ist in den wesentlichen Schritten nachfolgend dargestellt. Gesamtablauf eines Parkbremsvorganges:
- Fahrer betätigt Handbremsventil bzw. Handbrems-Sollwertgeber
- EBS erhält über Datenbus den Fahrerwunsch "Parkbremse einlegen"
- EBS steuert Parkbrems-Solldruck in die BBA-Zylinder der zu verriegelnden Bremsen
- EBS sendet über Datenbus den Befehl "Parkbremse arretieren" an die zu verriegelnden Bremsen

### Beschreibung des weiteren Ablaufs für Bremse VL (Vorderachse links)

- Bremse VL erhält über Datenbus den Befehl "Parkbremse arretieren" von EBS
- Bremsen ECU VL gibt Befehl "Nachsteller 1 in Drehrichtung A ansteuern"
- Abfrage Blockposition: Motordrehzahl 1 < N min ? Motorstrom 1 > 1 block?

### Blockposition erkannt:

- Bremsen ECU VL gibt Befehl: Motor 1 stromlos schalten
- Bremse VL sendet über Datenbus Info an EBS "Parkbremse ist arretiert"

### Weitere Betrachtung wieder für die gesamte Bremsanlage

- EBS überprüft, ob alle zu verriegelnden Bremsen den zustand "Parkbremse ist arretiert" zurückgemeldet haben
- Alle zu verriegelnden Bremsen haben "Parkbremse ist arretiert" gemeldet
- EBS entlüftet die Bremszylinder der zu verriegelnden Bremsen

### Das Lösen der Parkbremse läuft mit der Folge:

- Bremszylinder belüften
- Bremsen entriegeln
- Bremszylinder entlüften
in äquivalenter Weise ab.

### Bezugszeichen

- Bremsscheibe: 1
- Bremssattel: 2
- Bremsbeläge: 3,4
- Zuspannvorrichtung: 5
- Drehhebel: 6
- Stellkolben: 7
- Druckplatte: 8
- Antrieb: 9
- Spindel: 10
- Zahnräder: 11
- Hülse: 12
- Verriegelungseinrichtungen: 13
- Verspreizmutter: 14
- Außengewinde: 15
- Anschlag: 17
- Nachstellvorrichtung: 18

## Patentansprüche

1. Scheibenbremse mit einem eine Bremsscheibe (1) zumindest abschnittsweise einfassenden Bremssattel (2) und mit:
a. einer elektromotorisch oder pneumatisch betätigten Zuspanneinrichtung (5) zum Zuspannen wenigstens eines Bremsbelages (3,4) in Richtung der Bremsscheibe (2),
b. einem oder mehreren axial verschieblichen Stellkolben (7), die sich an einem ihrer Enden an einem Element der Zuspanneinrichtung abstützen und an ihrem anderen axialen Ende über Druckstücke (8) auf den zuspannseitigen Bremsbelag (3) einwirken,
c. wobei die gesamte axiale Länge der Stellkolben (7) zum Ausgleich von Verschleiß insbesondere des zuspannseitigen Bremsbelages (3) veränderlich ist,
**gekennzeichnet durch**
d. eine Verriegelungseinrichtung (14) zum Verriegeln der axialen Position der verschieblichen Stellkolben (7),
e. wobei die Stellkolben (7) jeweils eine Spindel (10) und auf der Spindel verschraubbare Hülse (12) aufweisen, wobei die Verriegelungseinrichtung eine oder mehrere Verspreizmuttern (14) umfasst, die auf ein Außengewinde (15) der Hülse (12) oder Spindel (10) aufgeschraubt und mittels einer Antriebsvorrichtung gegen einen axialen Anschlag (17) verfahrbar ist/sind, um derart die axiale Position der Stellkolben (7) zu fixieren.

2. Scheibenbremse nach Anspruch 1, **dadurch gekennzeichnet, dass** der Anschlag (17) als Bund am Bremssattel ausgebildet ist.

3. Scheibenbremse nach Anspruch 1 oder 2, **dadurch gekennzeichnet, dass** den Verspreizmuttern (14) ein elektromotorischer Antrieb zugeordnet ist.

4. Scheibenbremse nach Anspruch 3, **dadurch gekennzeichnet, dass** die Verspreizmuttern (14) mittels des elektromotorischen Antriebes für die axiale Längenveränderung der Stellkolben auf den Hülsen (12) beweglich sind.

5. Scheibenbremse nach Anspruch 3, **dadurch gekennzeichnet, dass** die Verspreizmuttern (14) mittels eines separaten, vom elektromotorischen Antrieb zum Ausgleich von Belagverschleiß auf den Hülsen unabhängigen weiteren Antrieb verschraubbar sind.

6. Scheibenbremse nach einem der vorstehenden Ansprüche, **dadurch gekennzeichnet, dass** jeweils ein auf den Nachstellspindeln oder -hülsen angeordnetes und zum Antrieb derselben dienendes Zahnrad (11) auch als Verspreizmutter ausgebildet ist.

7. Scheibenbremse nach Anspruch 6, **dadurch gekennzeichnet, dass** die Verbindung der Zahnräder (11) mit den Nachstellspindeln so gestaltet ist, dass die Zahnräder über ein Gewinde auf die Nachstellspindeln aufgeschraubt sind und in ihrer Normalposition an dem Anschlag an den Nachstellspindeln anliegen, wobei die Drehmomentübertragung in einer Drehrichtung gegen diesen Anschlag erfolgt und sich die Zahnräder in der entgegengesetzten Drehrichtung von diesem Anschlag lösen.

8. Scheibenbremse nach Anspruch 7, **dadurch gekennzeichnet, dass** die Zahnräder (11) zusätzlich mit den Stellkolben über eine vorgespannte Rutschkupplung verbunden sind, die ein Lösen erst oberhalb eines bestimmten Grenzdrehmoments zulässt, wobei das Grenzdrehmoment oberhalb des Arbeitsbereiches des Nachstellantriebs liegt.

## Claims

1. A disc brake with a brake calliper (2) which encompasses a brake disc (1), at least in sections, and with:
a. a brake application means (5) which is actuated by electric motor or pneumatically for applying at least one brake lining (3, 4) in the direction of the brake disc (2),
b. one or more axially displaceable adjusting piston(s) (7), which at one of their ends are supported on an element of the brake application means and at their other axial end act via thrust pieces (8) on the brake-application side brake lining (3),
c. the entire axial length of the adjusting pistons (7) being changeable in order to compensate for wear in particular of the brake lining (3) on the brake-application side,
**characterised by**
d. a locking means (14) for locking the axial position of the displaceable adjusting pistons (7),
e. the adjusting pistons (7) having in each case a spindle (10) and a sleeve (12) which can be screwed onto the spindle, the locking means comprising one or more expanding nuts (14) which are screwed onto an external thread (15) of the sleeve (12) or spindle (10) and can be moved against an axial stop (17) by means of a drive device in order thus to fix the axial position of the adjusting pistons (7).

2. A disc brake according to Claim 1, **characterised in that** the stop (17) is formed as a collar on the brake calliper.

3. A disc brake according to Claim 1 or 2, **characterised in that** an electric-motor drive is associated with the expanding nuts (14).

4. A disc brake according to Claim 3, **characterised in that** the expanding nuts (14) are movable by means of the electric-motor drive for axially changing the length of the adjusting pistons on the sleeves (12).

5. A disc brake according to Claim 3, **characterised in that** the expanding nuts (14) can be screwed by means of a separate further drive which is independent of the electric-motor drive for compensating for lining wear on the sleeves.

6. A disc brake according to one of the preceding claims, **characterised in that** in each case a gear wheel (11) which is arranged on the adjustment spindles or adjustment sleeves and which serves for driving the same is also formed as an expanding nut.

7. A disc brake according to Claim 6, **characterised in that** the connection of the gear wheels (11) to the adjustment spindles is configured such that the gear wheels are screwed onto the adjustment spindles via a thread and in their normal position lie against the stop on the adjustment spindles, the torque transmission taking place in a direction of rotation against this stop and the gear wheels in the opposite direction of rotation detaching from this stop.

8. A disc brake according to Claim 7, **characterised in that** the gear wheels (11) are additionally connected to the adjusting pistons via a prestressed friction clutch which permits detachment only above a certain limit torque, the limit torque lying above the operating range of the adjustment drive.

## Revendications

1. Frein à disque comprenant un étrier de frein (2) chevauchant un disque de frein (1) au moins en sections, et comprenant:
(a) un dispositif de serrage (5) commandé en mode électromoteur ou pneumatique à serrer au moins une garniture de frein (3, 4) en un sens vers ledit disque de frein (2),
(b) un ou plusieurs pistons de réglage (7) déplaçable en sens axial, qui s'appuient par une de leurs extrémités à un élément dudit dispositif de serrage et agissent par leur autre extrémité axiale, via des plaques d'appui (8), sur la garniture de frein (3) du côté de serrage,
(c) dans lequel toute la longueur axiale desdits pistons de réglage (7) est variable afin de compenser l'usure en particulier à ladite garniture de frein (3) du côté de serrage,
**caractérisé par**
(d) un dispositif de verrouillage (14) à verrouiller la position axiale desdits pistons de réglage déplaçables (7),
(e) dans lequel chacun desdits pistons de réglage (7) comprend une broche (10) respective et une douille (12) aptes à être vissé sur ladite broche, ce dispositif de verrouillage comprenant un ou plusieurs écrous écarteurs (14), qui est/sont vissé(s) sur un filet extérieur (15) de ladite douille (12) ou broche (10) et mobile(s) contre une butée axiale (17) moyennant un dispositif d'entraînement afin de fixer de cette façon la position axiale desdits pistons de réglage (7).

2. Frein à disque selon la revendication 1, **caractérisé en ce que** ladite butée (17) est configurée sous forme d'une collerette audit étrier de frein.

3. Frein à disque selon la revendication 1 ou 2, **caractérisé en ce qu'**un dispositif électromoteur d'entraînement est affecté auxdits écrous écarteurs (14).

4. Frein à disque selon la revendication 3, **caractérisé en ce que** lesdits écrous écarteurs (14) sont mobiles moyennant ledit dispositif électromoteur d'entraînement pour la variation de la longueur axiale desdits pistons de réglage sur lesdits douilles (12).

5. Frein à disque selon la revendication 3, **caractérisé en ce que** lesdits écrous écarteurs (14) sont aptes à être vissé moyennant un autre dispositif moteur séparé indépendant dudit dispositif électromoteur d'entraînement pour la compensation de l'usure de garniture sur lesdites douilles.

6. Frein à disque selon une quelconque des revendications précédentes, **caractérisé en ce qu'**une roue dentée (11) respective, disposée sur lesdites broches ou douilles de rattrapage et servant à entraîner les dernières, est également configurée sous forme d'un écrou écarteur.

7. Frein à disque selon la revendication 6, **caractérisé en ce que** la connexion desdits roues dentées (11) auxdites broches de rattrapage est configurée d'une telle manière, que lesdites roues dentées soient vissées via un filetage sur lesdites broches de rattrapage et portent à ladite butée auxdites broches de rattrapage en leur position normale, la transmission du couple se faisant en un sens de rotation contre cette butée et lesdites roues dentées se détachant de cette butée en sens de rotation opposée.

8. Frein à disque selon la revendication 7, **caractérisé en ce que** lesdites roues dentées (11) sont au plus raccordées auxdits pistons de réglage via un moyen d'accouplement à friction mis en précontrainte, qui ne permet un détachement qu'au dessus d'un couple limite déterminé, audit couple limite étant plus haut que la plage d'opération du dispositif moteur de rattrapage.
